(19) Europäisches Patentamt
European Patent Office
Office européen des brevets

(11) **EP 1 762 738 A2**

(12) **EUROPÄISCHE PATENTANMELDUNG**

(43) Veröffentlichungstag:
**14.03.2007 Patentblatt 2007/11**

(51) Int Cl.:
***F16D 33/16*** *(2006.01)*

(21) Anmeldenummer: **06018829.9**

(22) Anmeldetag: **08.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **13.09.2005 DE 102005043761**

(71) Anmelder: **Voith Turbo GmbH & Co. KG
89522 Heidenheim (DE)**

(72) Erfinder: **Menne, Achim, Dr.
74564 Crailshelm (DE)**

(74) Vertreter: **Dr. Weitzel & Partner
Friedenstrasse 10
89522 Heidenheim (DE)**

(54) **Verfahren zur Steuerung einer hydrodynamischen Kupplung**

(57) Die Erfindung betrifft ein Verfahren zur Steuerung einer hydrodynamischen Kupplung (1), umfassend ein Primärrad (2) und ein Sekundärrad (3), die einen Arbeitsraum (4) bilden, wobei die hydrodynamische Kupplung befüll- und entleerbar ist und dieser ein Betriebsmittelversorgungssystem (12) zugeordnet ist, umfassend eine Stelleinrichtung (14) zur Einstellung eines Füllungsgrades im Arbeitsraum;
gekennzeichnet durch die folgenden Merkmale:
- bei welchen in einem ersten Betriebsbereich, welcher durch ein Drehzahlverhältnis $\upsilon = n_T / n_P$ zwischen null und einem vordefinierten Betrag $\upsilon_{grenz} = X$ die Leistungsaufnahme der hydrodynamischen Kupplung über eine Beeinflussung des Füllungsgrades (FG) eingestellt wird und
- in einem zweiten Betriebsbereich, welcher durch ein Drehzahlverhältnis zwischen der Drehzahl des Sekundärrades und der Drehzahl des Primärrades von $\upsilon = n_T / n_P$ zwischen dem vordefinierten Wert $\upsilon_{Grenz} = X$ und $\upsilon = 1$ charakterisiert ist die Leistungsaufnahme über mechanische Einbauten (17) im Arbeitsraum, welche relativ gegenüber diesem bewegbar sind, beeinflusst wird.

Fig.3

EP 1 762 738 A2

**Beschreibung**

Die Erfindung betrifft ein Verfahren zur Steuerung einer hydrodynamischen Kupplung, im einzelnen mit den Merkmalen aus dem Oberbegriff des Anspruchs 1.

Verfahren zur Steuerung der Leistungsaufnahme einer hydrodynamischen Kupplung sind in einer Vielzahl von Ausführungen aus dem Stand der Technik bekannt. Stellvertretend wird auf WO 02/18811 verwiesen. Aus dieser ist es bekannt, zur Beeinflussung des Übertragungsverhaltens den Füllungsgrad zu steuern. Dabei ist die Steuerung der Leistungsaufnahme eines Anfahrelementes in Form einer hydrodynamischen Kupplung, umfassend ein Primärrad und ein Sekundärrad, die miteinander wenigstens einen mit Betriebsmittel befüllbaren torusförmigen Arbeitsraum bilden, in einem Antriebssystem mit mindestens noch einer mit der hydrodynamischen Kupplung koppelbaren Antriebsmaschine in Abhängigkeit vom Füllungsgrad frei einstellbar, d. h. zwischen maximaler und minimaler, d. h. Leistungsaufnahme gleich Null. Diese freie Einstellbarkeit ermöglicht es, hinsichtlich unterschiedlicher Kriterien, beispielsweise Energieverbrauch und Schadstoffemission, Betriebspunkte im Kennfeld einer Antriebsmaschine oder auch der Arbeitsmaschine, welche mit der hydrodynamischen Kupplung auf der Abtriebsseite gekoppelt ist, anzusteuern. Dabei erfolgt bei Vorliegen einer, die gewünschte aufzunehmende Leistung der hydrodynamischen Kupplung wenigstens mittelbar charakterisierenden Größe eine Änderung der Leistungsaufnahme durch die aktive Steuerung des Füllungsgrades der hydrodynamischen Kupplung. Die Follungsgradsteuerung erfolgt dabei vorzugsweise durch das Erzeugen und/oder Aufbringen eines Beeinflussungsdruckes auf ein ruhendes Medium, insbesondere den im Rahmen einer Betriebsmittelversorgungseinrichtung in einer Betriebsmittelspeichereinrichtung sich einstellenden Betriebsmittelspiegel oder einen Steuermittelspiegel. Dabei wird ein Teil des im Arbeitsraum der hydrodynamischen Kupplung befindlichen Betriebsmittels während des Betriebes der hydrodynamischen Kupplung in einem geschlossenen Kreislauf zwischen wenigstens einem Austritt aus dem Arbeitsraum und einem Eintritt in den Arbeitsraum geführt, wobei der Eintritt mit einer gegenüber der Umgebung druckdicht angeschlossenen Betriebsmittelspeichereinheit gekoppelt ist. Es wird dann eine Stellgröße zur Erzeugung eines Beeinflussungsdruckes auf das in der Betriebsmittelspeichereinheit ruhende Medium erzeugt und die Stelleinrichtung entsprechend betätigt. Die Befüllung oder Entleerung erfolgt bis zur Einstellung einer Druckwaage zwischen dem Betriebsmittelspiegel in der Betriebsmittelspeichereinrichtung und dem rotierenden geschlossenen Kreislauf. Es hat sich jedoch gezeigt, dass sich mit dieser Art der Steuerung trotzdem noch nicht alle gewünschten Betriebsbereiche optimal anfahren lassen und damit Betriebspunkte nicht optimal eingestellt werden können. So gibt es Kennfehlbereiche mit Hysterese sowie Instabilitäten und Sprungstellen im Kennfeld der hydrodynamischen Kupplung, die eine Steuerung/ Regelung erschweren oder gar unmöglich machen, so dass die Füllungsgradsteuerung in der Praxis durch einen eingeschränkten Einsatzbereich charakterisiert ist.

Der Erfindung lag daher die Aufgabe zugrunde, ein Verfahren zum Betreiben einer steuerbaren hydrodynamischen Kupplung derart zu entwickeln, dass die genannten Nachteile des Standes der Technik vermieden werden. Im einzelnen ist dabei auf die Vermeidung von Instabilitäten durch Umgehung der Kennfehlbereiche mit Hysterese abzustellen. Die erfindungsgemäße Lösung soll sich dabei durch einen geringen konstruktiven und steuerungstechnischen Aufwand auszeichnen.

Die erfindungsgemäße Lösung ist durch die Merkmale des Anspruchs 1 charakterisiert. Vorteilhafte Ausgestaltungen sind in den Unteransprüchen wiedergegeben.

Erfindungsgemäß werden zur Steuerung einer hydrodynamischen Kupplung aus dem Stand der Technik bekannte Maßnahmen miteinander in geeigneter Weise kombiniert, so dass in den einzelnen Kennfeldbereichen die Betriebspunkte frei einstellbar sind. Erfindungsgemäß ist das Verfahren zur Steuerung einer hydrodynamischen Kupplung, umfassend ein Primärrad und ein Sekundärrad, die miteinander wenigstens einen Arbeitsraum bilden, welcher befüll- und entleerbar ist, dadurch charakterisiert, dass in einem ersten Betriebsbereich, welcher durch ein Drehzahlverhältnis $\upsilon = n_T / n_P$ zwischen einschließlich null und einem Grenzwert $\upsilon_{grenz}$ die Leistungsaufnahme der hydrodynamischen Kupplung allein über eine Änderung des Füllungsgrades beeinflusst wird, während in einem zweiten Betriebsbereich, welcher durch ein Drehzahlverhältnis $\upsilon = n_T / n_P$ in einem Bereich $\upsilon_{grenz} \leq \upsilon \leq 1$ charakterisiert ist, die Leistungsaufnahme über die Ansteuerung mechanischer Einbauten zur Beeinflussung des Strömungskreislaufes im Arbeitsraum beeinflusst wird. Die mechanischen Einbauten können unterschiedlich ausgeführt sein und auf einen beliebigen Durchmesser zwischen dem Innendurchmesser und dem Außendurchmesser des Arbeitsraumes wirksam werden. Die Wirksamkeit ergibt sich dabei durch Erstreckung in den durch den Betrieb einstellenden Strömungskreislauf hinein, wobei durch die mechanischen Einbauten bedingten Störstellen oder Flächen in einem Winkel zum sich im Arbeitskreislauf einstellenden Strömungskreislauf in diesem Zusammenhang ausgerichtet sind. Bezüglich der Ausbildung der einzelnen mechanischen Einbauten bestehen keinerlei Beschränkungen. Diese können als beliebig gestaltete Elemente, die geeignet sind, den Strömungskreislauf im Arbeitsraum zu beeinflussen, ausgeführt sein. Vorzugsweise werden jedoch Bolzen oder wenigstens teilringförmige Elemente, vorzugsweise ringförmige Elemente, verwendet. Deren wirksame Fläche erstreckt sich dabei Ober wenigstens einen Teilbereich in Umfangsrichtung und erstreckt sich ausgehend von der Rotationsachse betrachtet in radialer Richtung. Es besteht dabei die Möglichkeit, lediglich ein Element zu verwenden oder aber eine Mehrzahl von in Umfangsrichtung zueinander beabstandeten Elementen, wie dies insbesondere für Bolzenelemente in Betracht gezogen werden kann.

Gemäß einer besonders vorteilhaften Ausführung umfassen die mechanischen Einbauten eine in axialer Richtung verschiebbare Drosselscheibe, wobei die Drosselscheibe sich vom Bereich des Innendurchmessers des Arbeitsraumes in Richtung des Außendurchmessers in den Arbeitsraum hinein erstreckt. Die Drosselscheibe ist dabei einem der Schaufelräder zugeordnet und zwischen der Trennebene und vorzugsweise bis zum Außenumfang eines Schaufelrades verschiebbar. Dabei werden zwei Grenzstellungen unterschieden, eine erste sogenannte inaktive Stellung, in welcher die Drosselscheibe keinerlei Einfluss auf die Verhältnisse im Strömungskreislauf besitzt und eine zweite Grenzstellung, welcher der maximalen Verschiebbarkeit der Drosselscheibe entspricht, in der Regel die Anordnung im Bereich der Trennebene zwischen Primärrad und Sekundärrad, wobei die Drosselscheibe zwischen diesen zwei Endstellungen verschiebbar ist und jede Stellung einnehmen kann, Dazu ist dieser eine entsprechende Stelleinrichtung zugeordnet. Die Stelleinrichtung wird dabei entweder über autarke Steuerquellen oder aber der hydrodynamischen Kupplung bzw. im Kupplungssystem inherente Mittel betätigt. So kann beispielsweise das Betriebsmittelversorgungssystem genutzt werden, wobei hier Betriebsmittel als Steuermittel abgezweigt wird bzw. der Druck dessen genutzt wird.

Erfindungsgemäß wird, wie bereits ausgeführt, in einem ersten Betriebsbereich eine Änderung des Übertragungsverhaltens allein durch Änderung des Füllungsgrades erzielt, wobei die mechanischen Elemente in einer aktiven Position verharren, während in dem zweiten Bereich eine Beeinflussung des Übertragungsverhaltens durch den Stellbereich der mechanischen Einbauten, insbesondere einer axial verschiebbaren Drosselscheibe, bestimmt ist. Der erste Bereich ist dabei durch den Bereich hohen Schlupfes charakterisiert, d.h. einem Drehzahlverhältnis von $\upsilon = n_T/n_P$ im Bereich zwischen null und $\upsilon_{Grenz}$, wobei $\upsilon_{Grenz}$ das Ende des Stellbereiches für die Füllungsgradänderung charakterisiert. Entscheidungskriterium ist das Über- oder Unterschreiten von $\upsilon_{Grenz}$. Dabei erfolgt die erfindungsgemäße Beeinflussung in beide Richtungen, d.h. sowohl während des Anfahrvorganges, d.h. von hohem Schlupf zu geringem Schlupf als auch umgekehrt. Zur Ermittlung des Grenzdrehzahlverhältnisses $\upsilon_{Grenz}$ wird dabei jeweils eine, die Drehzahl am Sekundärrad wenigstens mittelbar charakterisierende Größe und eine die Drehzahl am Primärrad wenigstens mittelbar charakterisierende Größe ermittelt. Bei den diesen charakterisierenden Größen kann es sich um verschiedene Größen handeln, entscheidend ist, dass diese in einem funktionalen Zusammenhang stehen und aus diesen die Drehzahlen am Sekundärrad und am Primärrad ermittelt werden können. Im einfachsten Fall werden dabei die Drehzahlen von mit dem Sekundärrad oder dem Primärrad drehfest gekoppelten oder in Triebverbindung stehenden Elementen berücksichtigt, welche ohnehin für andere Steuerungsaufgaben eh ermittelt werden. Ferner kann auch die Drehzahl über das Moment ermittelt werden, wobei hier jedoch entsprechende Umrechnungen erforderlich sind. Vorzugsweise sind daher in der Regel eine direkte Ermittlung bzw. eine Ermittlung aus Drehzahlen von mit diesen Elementen drehfest oder unter Übersetzung gekoppelten Elementen genutzt. Diese Drehzahldifferenz wird dabei fortlaufend oder zumindest periodisch in bestimmten vordefinierten Zeitabständen, welche relativ kurz sein sollten, beispielsweise im Bereich von 1 ms bis 1 s überwacht. Je nach vorliegendem Drehzahlverhältnis und gewünschtem zu übertragenden Moment erfolgt dann die Vorgabe der entsprechenden Stellgrößen, entweder der Stellgrößen für die Änderung des Füllungsgrades oder aber für die Verschiebbarkeit der Drosselscheibe.

Im ersten Betriebsbereich wird erfindungsgemäß somit die Wirkung der mechanischen Einbauten und der Führungsgradänderung genutzt wobei zu einer Änderung des Übertragungsverhaltens ausgehend von einer bestimmten eingestellten Position der mechanischen Einbauten, vorzugsweise die aktive Stellung, einer Beeinflussung einer durch Füllungsgradänderung erfolgt. Im zweiten anschließenden Bereich bei erreichen $\upsilon_{grenz}$ wird der Füllungsgrad konstant gehalten, vorzugsweise der bei Ermittlung von $\upsilon_{grenz}$ aktuell vorliegende Füllungsgrad und die mechanische Einbauten entsprechend der Sollwertvorgabe zur Änderung der Leistungsaufnahme der Kupplung oder eine dieser wenigstens unmittelbar charakterisierende Größe verschoben.

Die erfindungsgemäße Lösung wird nachfolgend anhand von Figuren erläutert. Darin ist im einzelnen folgendes dargestellt:

Figuren 1a und 1b      verdeutlichen in schematisch vereinfachter Darstellung erfindungsgemäße Verfahren anhand eines Signalflussbildes;

Figur 2      verdeutlicht anhand eines Drehzahlverhältnis/Drehmomentdiagrammes die einzelnen Funktionszustände;

Figur 3      verdeutlicht in schematisch vereinfachter Darstellung ein Ausführungsbeispiel einer hydrodynamischen Kupplung mit möglicher hybrider Steuerung.

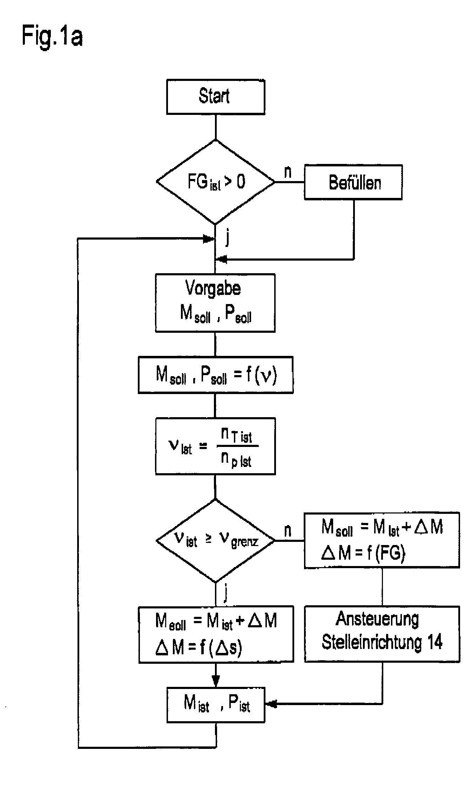

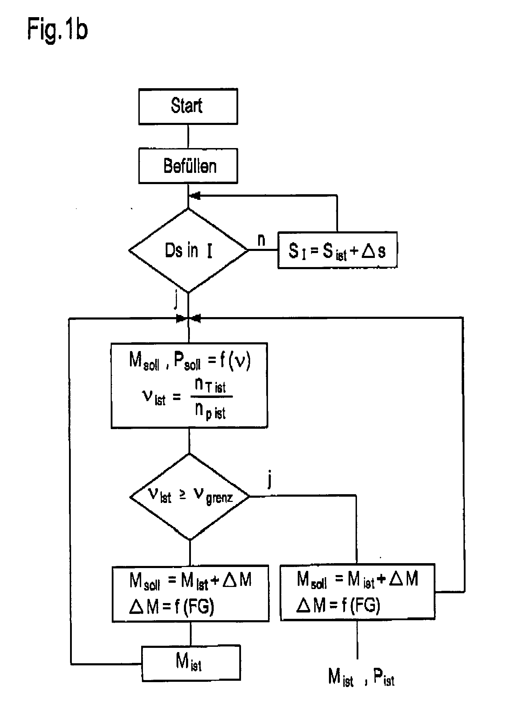

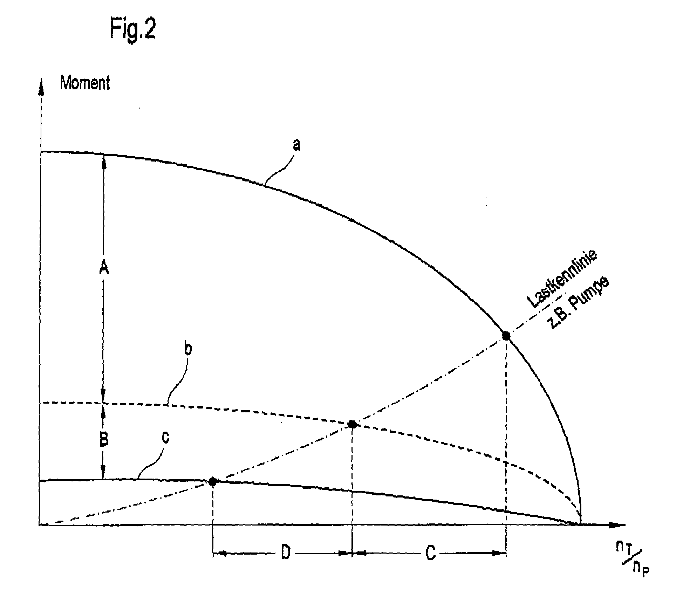

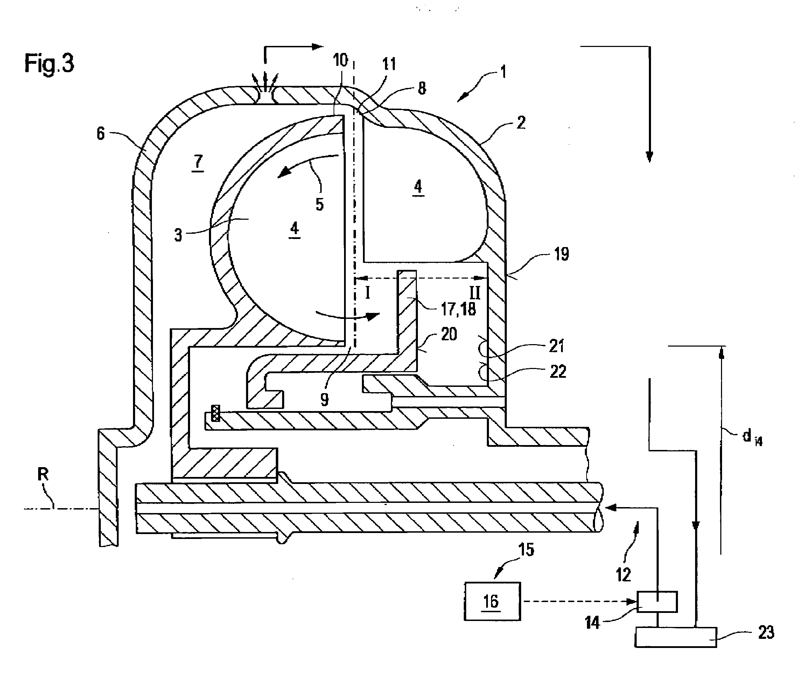

Die Figuren 1 und 2 verdeutlichen anhand eines Diagramms und von Signalflussbildem das Grundprinzip eines erfindungsgemäßen Verfahrens zur Steuerung der Leistungsübertragung über eine hydrodynamische Kupplung 1, umfassend Schaufelräder, ein Primärrad 2 und ein Sekundärrad 3, die einen mit Betriebsmittel befüllbaren Arbeitsraum 4 bilden. Der Aufbau der hydrodynamischen Kupplung 1 ist beispielhaft in der Figur 3 wiedergegeben und wird nachfolgend beschrieben. Diese umfasst ferner eine mit dem Primärrad 2 drehfest verbundene Primärradschale 5, welche das Sekundärrad 3 in Umfangsrichtung und wenigstens teilweise in axialer Richtung umschließt. Das Primärrad 2 ist dabei im Regelfall mit einer hier nicht dargestellten Antriebsmaschine wenigstens mittelbar, das heißt direkt oder indirekt über weitere Übertragungselemente drehfest verbunden, während das Sekundärrad 3 mit einem hier im einzelnen nicht dargestellten Abtrieb wenigstens indirekt, das heißt entweder direkt oder über weitere Übertragungselemente verbindbar ist. Verbindbar bedeutet dabei, dass entweder eine ständige drehfeste Verbindung zwischen dem jeweiligen Schaufelrad und dem Anschlusselement vorgesehen ist oder aber eine Schaltbarkeit gegeben ist. Primärschaufelrad 2 und das Sekundärschaufelrad 3 bilden dabei einen mit Betriebsmittel befüllbaren Arbeitsraum 4. In diesem stellt sich bei Rotation des Primärschaufelrades 2 ein Strömungskreislauf ein, der hier mit 5 bezeichnet ist und mittels eines Pfeils angedeutet ist. Dabei kann es sich bei der hydrodynamischen Kupplung 1 um eine hydrodynamische Kupplung mit stehendem oder aber wie in der Figur 3 wiedergegeben mit rotierendem Gehäuse handeln. Im ersten, hier nicht dargestellten Fall umschließt das Gehäuse das Primärschaufelrad 2 und das Sekundärschaufelrad 3 in axialer Richtung und in Umfangsrichtung unter Bildung von sogenannten Schaufelradnebenräumen. Im zweiten Fall, wie in der Figur 3 wiedergegeben, ist das Gehäuse, welches hier mit 6 bezeichnet ist, drehfest mit dem Primärrad 2 verbunden und umschließt das Sekundärrad 3 in Umfangsrichtung vollständig und in radialer Richtung teilweise unter Bildung eines Schaufelradnebenraumes 7. Das Gehäuse 6 wird dabei auch als Kupplungsschale bezeichnet und ist mit dem Primärrad 2 entweder drehfest verbunden und bildet mit diesem eine integrale Baueinheit. Die hydrodynamische Kupplung 1, insbesondere der Arbeitsraum 4 ist, wie bereits ausgeführt, befüll- und entleerbar. Das bedeutet, es ist wenigstens ein Eintritt 8 in den Arbeitsraum und ein Austritt 9 aus dem Arbeitsraum 4 vorgesehen. Eintritt 8 und Austritt 9 können je nach Art der Durchströmung der hydrodynamischen Kupplung unterschiedlich angeordnet sein. Dies richtet sich danach, ob eine zentripetale oder zentrifugale Durchströmung gewünscht ist. Im dargestellten Fall handelt es sich um eine hydrodynamische Kupplung 1 mit zentripetaler Durchströmung. Dies bedeutet, das Betriebsmittel wird um den Außenumfang 10 des Sekundärrades 3 herumgeführt und in den Spalt 11 zwischen Primärrad 2 und Sekundärrad 3 im Bereich der Trennebene T in den Arbeitsraum 4 eingebracht, Die Entleerung erfolgt dann aus dem Arbeitsraum 4 in Richtung des Innendurchmessers $d_{14}$ des Arbeitsraumes 4 in Richtung zur Rotationsachse R der hydrodynamischen Kupplung 1. Auf die konkreten Möglichkeiten der Befüllung wird hier im einzelnen nicht eingegangen, da aus dem Stand der Technik bereits eine Vielzahl von Möglichkeiten bekannt sind, auf die zurückgegriffen werden kann. Die Befüllung und Entleerung wird dabei über ein sogenanntes Betriebsmittelversorgungs- und/oder Führungssystem 12 realisiert und koordiniert. Dieses umfasst eine Betriebsmittelquelle 23. Dabei sind der hydrodynamischen Kupplung 1 ferner Mittel zur Einstellung eines vordefinierten oder gewünschten Füllungsgrades FG zugeordnet. Diese umfassen wenigstens eine Stelleinrichtung 14. Diese kann vielgestaltig ausgeführt sein und eine Reihe von Komponenten umfassen. Diese ist hier in schematisch vereinfachter Darstellung lediglich angedeutet. So kann beispielsweise zur Steuerung des Füllungsgrades FG eine mit dem Eintritt 8 in den Arbeitsraum 4 gekoppelte Ventileinrichtung genutzt werden, wobei der Druck in den mit dem Eintritt 8 beziehungsweise dem Austritt 9 gekoppelten Leitungen und Kanälen variiert wird, Eine andere Ausführung besteht darin, beispielsweise bei Kopplung zwischen Eintritt 8 und Austritt 9 über einen Kreislauf diesen mit einem statischen Überlagerungsdruck zu beaufschlagen und somit den Füllungsgrad FG zu beeinflussen. Die konkrete Art und Weise der Steuerung des Füllungsgrades hängt dabei von den Gegebenheiten des Einzelfalles ab, Die Einstellung eines vordefinierten oder gewünschten Füllungsgrades FG über die Mittel 13 erfolgt dabei in Form einer Steuerung oder aber Regelung. Dazu ist der hydrodynamischen Kupplung eine Steuer- und/oder Regelvorrichtung 15 zugeordnet, welche wenigstens eine Steuer- und/oder Regeleinrichtung 16 umfasst, welche entweder als bauliche Einheit in Form eines Steuergerätes vorliegen kann oder aber als sogenanntes virtuelles Steuergerät, bei welchem die einzelnen Komponenten in räumlicher Entfernung voneinander angeordnet sind und über ein Datenkommunikationsnetzwerk miteinander gekoppelt werden. Die Steuer- und/oder Regeleinrichtung 16 ist dabei mit der Stelleinrichtung 14 gekoppelt. Ferner umfasst die hydrodynamische Kupplung 3 Mittel 17 zur Beeinflussung des Strömungskreislaufes 5 im Arbeitsraum 4. Diese umfassen im dargestellten Fall eine Drosselscheibe 18, welche im Bereich des inneren Durchmessers $d_{14}$ des Arbeitsraumes angeordnet ist und die sich in diesen hineinerstreckt. Die Drosselscheibe 18 ist relativ gegenüber dem Arbeitsraum 4 verschiebbar, insbesondere in axialer Richtung verschiebbar gelagert, im dargestellten Fall in axialer Richtung zwischen dem Austritt 9 aus dem Sekundärschaufelrad 3 und dem Außenumfang 19 des Primärschaufelrades 2. Die Lagerung erfolgt im dargestellten Fall am Primärschaufelrad 2. Die Drosselscheibe 18 kann dabei zwischen den zwei Grenzstellungen, einer ersten Grenzstellung I und einer zweiten Grenzstellung II in axialer Richtung verschoben werden. Die Verschiebung erfolgt vorzugsweise stufenlos. Die erste Grenzstellung I und die Zwischenstellung bis zur Stellung II werden dabei auch als sogenannte aktive Lage der Drosselscheibe 18 bezeichnet, wobei die Drosselscheibe 18 in der Grenzstellung I im Bereich der Trennebene T zwischen beiden Schaufelrädern 2, 3 in axialer Richtung betrachtet angeordnet ist. Die zweite Grenzstellung II wird als weniger- oder je nach Position auch als inaktive Stellung bezeichnet. In dieser ist die Drosselscheibe 18 in Richtung des Außenumfanges 19 des Primärschaufelrades 2 verschoben, vorzugsweise liegt die Drosselscheibe 18 mit der von der Trennebene T weggerichteten Stirnseite 20 in der zweiten Grenzstellung II bündig am Innenumfang 21 des Primärschaufelrades 2, insbesondere einem Innenumfangsteilbereich 22 an, der frei von einer Beschaufelung 24 ist oder bildet den Wandbereich des Primärschaufelrades 2.

Erfindungsgemäß werden bei gewünschter Änderung der die Leistungsübertragung bestimmenden Parameter, das heißt zur Steuerung der übertragbaren Leistung nunmehr die unterschiedlichen Maßnahmen zur Beeinflussung des Strömungskreislaufes 5 in entsprechender Weise, wie in der Figur 1a anhand eines Signalflussbildes dargestellt, miteinander kombiniert. Entsprechend dem erfindungsgemäßen Verfahren wird dabei zum einen eine Steuerung des Füllungsgrades FG und zum anderen die Steuerung über die mechanischen Einbauten genutzt. Die Figur 1a verdeutlicht dabei ganz allgemein das Grundprinzip des erfindungsgemäßen Verfahrens zur Steuerung der Leistungsaufnahme, insbesondere zur Steuerung der Drehzahl, der aufnehmbaren Leistung oder des aufnehmbaren Momentes für eine hydrodynamische Kupplung 1. Dabei kann die Steuerung auch in eine Regelung integriert werden bzw. die genannten Größen selbst eingeregelt werden. Entsprechend einer Sollwertvorgabe nach Änderung oder Einstellung zumindest einer der nachfolgend genannten Größen, wobei die Sollwertvorgabe auch mittelbar erfolgen kann, d. h. es wird eine Größe vorgegeben, die im festen funktionalem Zusammenhang zu einer der nachfolgend genannten Größen steht, wird die Steuerung oder Regelung des Istwertes dieser Größe vorgenommen: Dabei handelt es sich beispielsweise um folgende Größen:

- die vom Primärrad 2 aufnehmbare Leistung
- das vom Primärrad 2 aufnehmbare Moment
- die Drehzahl $n_P$ des Primärrades 2 oder einer zumindest drehfest mit dieser gekoppelten Komponente, insbesondere der Antriebsmaschine $n_M$
- Drehzahl $n_T$ des Sekundärrades 3 beziehungsweise einer drehfest mit dieser gekoppelten Komponente

Mittelbar bedingt dabei wenigstens im funktionalen Zusammenhang stehend. D.h. die Größen können direkt vorgegeben werden oder aber eine, diese Größen wenigstens mittelbar beschreibende Größe, welche über den funktionalen Zusammenhang die einzustellende Größe beschriebt,

Ferner wird das Drehzahlverhältnis $\upsilon$, insbesondere das aktuelle Drehzahlverhältnis aus der Drehzahl $n_T$ des Sekundärrades 3 und der Drehzahl np des Primärrades 2, welches mit $\upsilon$ bezeichnet ist, ermittelt. Die Ermittlung der Größen erfolgt dabei entweder direkt oder indirekt über funktionale Zusammenhänge aus den diese Größen wenigstens mittelbar charakterisierende Größen, Liegt dabei das ermittelte Drehzahlverhälnis $\upsilon \text{ ist} = \dfrac{n_T \; ist}{n_P \; ist}$ unterhalb eines

bestimmten Grenzdrehzahlverhältnisses $\upsilon_{grenz} = X \text{ mit } X = \dfrac{n_{TX}}{n_{PX}}$, erfolgt die Einstellung des erforderlichen Sollwertes, der durch eine Änderung $\Delta M$ des von der hydrodynamischen Kupplung aufnehmbaren Momentes von der hydrodynamischen Kupplung beziehungsweise des über diese übertragbaren Momentes oder eine Drehzahl $\Delta n$ charakterisiert ist, wobei $\Delta n$ die Änderung der Drehzahl am Primärrad 2 als auch die Änderung der Drehzahl am Sekundärrad 3 beziehungsweise jeweils eines mit diesem drehfest koppelbaren Elementes beschreibt, durch Änderung des Füllungsgrades FG bei bestimmter konstanter Position der Drosselscheibe 18, vorzugsweise der aktiven Stellung I.

Bei einer Sollwertvorgabe $M_{soll}$ und vorliegenden des Drehzahlverhältnisses $\upsilon_{ist} = \dfrac{n_T \; ist}{n_P \; ist}$ im Bereich

zwischen einschließlich $\upsilon_{grenz}$ und 1 wird die entsprechende Momentenänderung $\Delta M$ und/oder Drehzahländerung $\Delta n$ dann bei eingestelltem Füllungsgrad durch die Ansteuerung der mechanischen Einbauten, insbesondere der Drosselscheibe 18 realisiert. Dabei ist eine Bewegung der Drosselscheibe 18 vorrangig. Die Drosselscheibe 18 wird dabei je nach gewünschter Momentenänderung in Richtung einer Vergrößerung oder Verkleinerung in Abhängigkeit der aktuellen Lage bewegt. Dabei wird die Lage s der Drosselscheibe erfasst, wobei die erste, aktive Funktionsstellung mit $s_I$ und die zweite mit $s_{II}$ charakterisiert ist. Die aktuelle Lage wird in $S_{Ist}$ bezeichnet. Die Momentenänderung $\Delta M$ beziehungsweise die daraus resultierende Drehzahländerung $\Delta n$ auf der An- oder Abtriebsseite der Kupplung ergibt sich dabei als Funktion der Lage s der Drosselscheibe 18, insbesondere des Verstellweges $\Delta s$. Die aktuelle Lage $S_{ist}$ ergibt sich aus der Position $s_{Alt} + \Delta s$, wobei die Lage $s_{ist}$ immer bezogen auf die erste oder zweite Endlage I, II als Verschiebeweg aus dieser Position beschreibbar ist. Bei gewünschter Momentenverringerung und/oder Vergrößerung der Drehzahl erfolgt eine Verschiebung in Richtung der aktiven Stellung I, während im anderen Fall eine Verschiebung in Richtung der inaktiven Stellung II vorgenommen wird, Für die einzelnen Betriebsbereiche, Anfahren beziehungsweise Betrieb der hydrodynamischen Kupplung mit entsprechender Sollwertvorgabe, sind die Verhältnisse noch einmal anhand von entsprechenden Signalflussbildern in den Figuren 1b und 1c wiedergegeben. Die Figur 1b verdeutlicht dabei den Ablauf des Verfahrens für einen Anfahrvorgang. Dieser ist durch ein Drehzahlverhältnis $\upsilon_{lst} = \dfrac{n_i\,ist}{n_P\,ist} = 0$ charakterisiert, wobei das Drehzahlverhältnis $\upsilon$ mit zunehmender Drehzahl $N_T$ am Sekundärschaufelrad 3 größer wird und sich Richtung $\upsilon_{grenz}$ *bewegt.* Dabei ist die Drosselscheibe 18 in der ersten Funktionsstellung I und die Befüllung der hydrodynamischen Kupplung 1, insbesondere des Arbeitsraumes 4 wird, vorgenommen, Dies bedeutet, dass das aufnehmbare Moment sich unter Wirkung der Drosselscheibe in ihrer aktiven Stellung I über eine Füllungsgradänderung $\Delta FG$ vornehmen lässt. Eine Änderung des aufnehmbaren Momentes $\Delta M$ beziehungsweise der Drehzahl im Primärrad $\Delta n_P$ oder der Drehzahl im Sekundärrad $\Delta n_T$ ergibt sich in diesem Fall als Funktion des Füllungsgrades FG. Dies erfolgt solange, bis ein Drehzahlverhältnis $\upsilon = \dfrac{n_T}{n_P}$ von X erreicht wird, wobei X dem Grenzdrehzahlverhältnis $\upsilon_x = \dfrac{n_{Tx}}{n_P x}$ entspricht. Erst ab diesem Drehzahlverhältnis wird zur weiteren Änderung, insbesondere Vergrößerung des aufnehmbaren Momentes beziehungsweise bei Vergrößerung der Drehzahl $n_T$ am Sekundärrad 3 oder Verkleinerung der Drehzahl $n_P$ am Primärrad 2 eine Deaktivierung der Wirkung der Drosselscheibe 18 vorgenommen, wobei diese entsprechend der gewünschten Änderung in der Leistungsübertragung von ihrer aktiven Stellung I in die inaktive Stellung II beziehungsweise zur Reduzierung von der inaktiven zur aktiven Stellung II verschoben wird. In diesem Bereich wird zusätzlich keine Füllungsgradänderung mehr vorgenommen, der Füllungsgrad bleibt konstant. Dieser enthält dabei vorzugsweise 100% oder entspricht irgend- einem vordefinierten maximalem Füllungsgrad $FG_{max}$.

Während des Betriebes der hydrodynamischen Komponente 1 sind dabei die entsprechend Figur 1a im Signalflussbild vorgegebene Abfolge der einzelnen Verfahrensschritte umzusetzen. Während des Betriebes der hydrodynamischen Kupplung und bei erfolgter Sollwertvorgabe $M_{Soll}$ beziehungsweise $n_{Soll}$ für die Drehzahl am Primärrad oder Sekundärrad wird das aktuelle Drehzahlverhältnis $\upsilon_{ist} > \dfrac{n_T\,ist}{n_P\,ist}$ ermittelt. Ist dieses größer als das Grenzdrehzahlverhältnis $\upsilon$*grenz,* wird das Übertragungsverhalten der hydrodynamischen Kupplung allein über die Drosselscheibe 18 bei konstantem Füllungsgrad gesteuert. Dazu wird die aktuelle Position $s_{ist}$ der Drosselscheibe ermittelt. Je nach gewünschter Momentenänderung oder Drehzahländerung, das heißt in Richtung Verringerung oder Vergrößerung und damit Einstellung eines Betriebspunktes im $M/\upsilon$-Kennfeld, erfolgt dann eine Verschiebung der Drosselscheibe 18 in Richtung der inaktiven oder aktiven Stellung II beziehungsweise I. Die Änderung $\Delta M$ beziehungsweise $\Delta n$ ergibt sich als Funktion von $\Delta s$, wobei sich die neue Position $s_{Neu}$ aus der aktuellen Position $S_{ist}$ und dem erforderlichen Verstellweg $\Delta s$ ergibt. Für eine gewünschte Verringerung des aufnehmbaren Momentes wird dabei zuerst die Drosselscheibe 18 in die aktive Stellung I verbracht und dann bei Unterschreitung des Grenzdrehzahlverhältnisses $\upsilon_{grenz}$ der entsprechende Sollwert weiter über die Füllungsgradänderung FG eingestellt. Im anderen Fall wird die Drosselscheibe 18 verschoben.

Die Figur 2 verdeutlicht dabei anhand eines Drehzahlverhältnis $\upsilon$/Momentendiagrammes die einzelnen Ver- hältnisse für die Lastkennlinie, zum Beispiel einer Pumpe. Dabei sind einzelne Kennlinien der hydrodynamischen Kupplung 1 aufgetragen, diese sind mit a bis c bezeichnet. a beschreibt dabei eine Kennlinie der hydrodynamischen Kupplung mit Voll- beziehungsweise nahezu Vollfüllung ohne zusätzliche Maßnahmen zur Beeinflussung des Strömungskreislaufes 5. Die Kennlinie c verdeutlicht die sich einstellenden Verhältnisse bei Follungsgradänderung $\Delta FG$, während die Kennlinie b die sich einstellenden Verhältnisse zur Drosselscheibe 18 in aktiver Stellung wiedergibt. Daraus ergeben sich Kennfeldbereiche. Der Kennfeldbereich A entspricht dabei dem überstreichbaren Bereich mit axial verschiebbarer Drosselscheibe 18 bei Vollfüllung, während der Kennfeldbereich B dem Kennfeldbereich, welcher durch Füllungsgrad- änderung $\Delta FG$ bei aktiver Stellung der axial verschiebbaren Drosselscheibe 18 beschreibbar ist, entspricht. C entspricht dem Stellbereich der axial verschiebbaren Drosselscheibe 18, während D den Stellbereich nur durch Füllungsgradän- derung $\Delta FG$ wiedergibt. Für die Lastkennlinie der anzutreibenden Pumpe ergeben sich dabei entsprechend die gewünschten einzustellenden Sollwerte Stellbereiche. Ohne erfindungsgemäßes Verfahren werden die entsprechenden Betriebspunkte im Kennfeld nur bedingt anfahrbar beziehungsweise die Stabilität der Betriebspunkte nicht gesichert.

Die Figur 1a verdeutlicht dabei das erfindungemäße Verfahren bei Aufteilung der Zuordnung der Betätigung der Stelleinrichtungen zum Beeinflussen der Leistungsaufnahme auf die einzelnen Betriebsbereiche, erster Betriebsbereich und zweiter Betriebsbereich, wobei im ersten Betriebsbereich die Leistungsaufnahme der hydrodynamischen Kupplung allein Ober die Beeinflussung des Füllungsgrades eingestellt wird, während im zweiten Betriebsbereich, das heißt bei einem Drehzahlverhältnis $\mu$ zwischen $\mu_{grenz}$ und 1 die Leistungsaufnahme über die mechanischen Einbauten gesteuert wird. Denkbar ist jedoch auch eine überlagerte Anbindung der beiden Maßnahmen, wobei im einfachsten Fall eine Füllungsgradänderung mit gleichzeitiger Verstellung der mechanischen Einbauten einhergeht. Dies ist insbesondere dann der Fall, wenn die Schaltgeschwindigkeit erhöht werden soll. Denkbar ist es auch, in jedem der Betriebsbereiche die jeweils andere Maßnahme zusätzlich mit vorzunehmen, wobei jedoch für den ersten Betriebsbereich die Einstellung über den Füllungsgrad primär bevorrechtigt ist, während für den zweiten Betriebsbereich die Verstellbarkeit durch die mechanischen Einbauten vorgenommen wird und zusätzlich eine Verstellung des Füllungsgrades erfolgen kann.

Bezugszeichenliste

1 hydrodynamische Kupplung
2 Primärrad
3 Sekundärrad
4 Arbeitsraum
5 Strömungskreislauf
6 Gehäuse
7 Schaufelradnebenraum
8 Eintritt
9 Austritt
10 Außenumfang
11 Spalt
12 Betriebsmittelversorgungs- und/oder Führungssystem
13 Mittel zur Einstellung eines vordefinierten Füllungsgrades
14 Stelleinrichtung
15 Steuer- und/oder Regelvorrichtung
16 Steuer- und/oder Regeleinrichtung
17 Mittel zur Beeinflussung des Strömungskreislaufes im Arbeitsraum
18 Drosselscheibe
19 Außenumfang
20 Stirnseite
21 Innenumfang
22 Teilbereich
23 Betriebsmittelspeicher
24 Beschaufelung

**Patentansprüche**

1. Verfahren zur Steuerung einer hydrodynamischen Kupplung (1), umfassend ein Primärrad (2) und ein Sekundärrad (3), die einen Arbeitsraum (4) bilden, wobei die hydrodynamische Kupplung (1) befüll- und entleerbar ist und dieser ein Betriebsmittelversorgungssystem (12) zugeordnet ist, umfassend eine Stelleinrichtung (14) zur Einstellung eines Füllungsgrades im Arbeitsraum (4);
   **gekennzeichnet durch** die folgenden Merkmale:

   1.1 bei welchen in einem ersten Betriebsbereich, welcher **durch** ein Drehzahlverhältnis $\upsilon = n_T / n_P$ zwischen null und einem vordefinierten Betrag $\upsilon_{grenz} = X$ die Leistungsaufnahme der hydrodynamischen Kupplung über eine Beeinflussung des Füllungsgrades (FG) eingestellt wird und
   1.2 in einem zweiten Betriebsbereich, welcher **durch** ein Drehzahlverhältnis zwischen der Drehzahl ($n_T$) des Sekundärrades (3) und der Drehzahl ($n_P$) des Primärrades (2) von $\upsilon = n_T / n_P$ zwischen dem vordefinierten Wert $\upsilon_{Grenz} = X$ und $u = 1$ charakterisiert ist die Leistungsaufnahme über mechanische Einbauten (17) im Arbeitsraum (4), welche relativ gegenüber diesem bewegbar sind, beeinflusst wird.

2. Verfahren nach Anspruch 1, daurch **gekennzeichnet**, dass im ersten Betriebsbereich die Leistungsaufnahme allein über eine Beeinflussung des Füllungsgrades eingestellt wird.

3. Verfahren nach Anspruch 1, **dadurch gekennzeichnet, dass** im ersten Betriebsbereich die Leistungsaufnahme der hydrodynamischen Kupplung (1) zusätzlich über mechanische Einbauten (17) im Arbeitsraum (4), welche relativ gegenüber diesem bewegt werden, beeinflusst wird, wobei eine Änderung des Füllungsgrades entweder zeitgleich oder zeitlich versetzt zur Betätigung der mechanischen Einbauten vorgenommen wird.

**4.** Verfahren nach einem der Ansprüche 1 bis 3, **dadurch gekennzeichnet, dass** im zweiten Betriebsbereich der bei Erzielung $v_{grenz}$ eingestellte Füllungsgrad konstant gehalten wird.

**5.** Verfahren nach einem der Ansprüche 1 bis 4, **dadurch gekennzeichnet, dass** im zweiten Betriebsbereich zusätzlich die Leistungsaufnahme durch Änderung des Füllungsgrades (FG) vorgenommen wird.

**6.** Verfahren nach einem der Ansprüche 1 bis 5, **gekennzeichnet durch** die folgenden Merkmale:

6.1 bei welchem ein Sollwert $M_{soll}$ für ein von der hydrodynamischen Kupplung aufnehmbares Moment oder eine aufnehmbare Leistung $P_{Soll}$ vorgegeben wird;

6.2 bei welchem das aktuelle Drehzahlverhältnis $v_{ist} = n_{Tist}/n_{Plat}$ oder/und die Drehzahl des Primärrades (2) ermittelt wird und

6,3 in Abhängigkeit des ermittelten Drehzahlverhältnisses $v_{ist}$ der Drehzahl des Primärrades (2) der Sollwert und/oder für das von der hydrodynamischen Kupplung (A) aufnehmbare Moment $M_{Soll}$ **durch** Ansteuerung der Stelleinrichtung (14) zur Änderung des Füllungsgrades (FG) oder der Stelleinrichtung zur Änderung der Stellung der mechanischen Einbauten (17) angesteuert wird.

**7.** Verfahren nach einem der Ansprüche 1 bis 6, **dadurch gekennzeichnet, dass** das aktuelle Drehzahlverhältnis $v_{ist}$ oder/und die Drehzahl des Primärrades (2) fortlaufend ermittelt wird.

**8.** Verfahren nach einem der Ansprüche 1 bis 7, **dadurch gekennzeichnet, dass** die mechanischen Einbauten (17) zwischen einer ersten aktiven Stellung (I) und einer zweiten inaktiven Stellung (11) verstellbar sind, wobei im ersten Betriebsbereich bis zur Erzielung des Drehzahlverhältnisses $v_{grenz}$ die mechanischen Einbauten in der aktiven Stellung (I) verbracht und gehalten werden.

**9.** Verfahren nach Anspruch 5, **dadurch gekennzeichnet, dass** die aktive Stellung (I) durch Anordnung im Bereich der Trennebene (T) zwischen Primärrad (2) und Sekundärrad (3) charakterisiert ist.

## Fig.1a

# Fig.1b

```
          ┌──────────┐
          │  Start   │
          └────┬─────┘
               │
          ┌────┴─────┐
          │ Befüllen │
          └────┬─────┘
               │
          ◇────┴────◇        n    ┌──────────────────┐
         ╱           ╲───────────│  S_I = S_ist + Δs │
        ╱   Ds in I   ╲          └──────────────────┘
         ╲           ╱
          ◇────┬────◇
               │ j
        ┌──────┴─────────────┐
        │ M_soll , P_soll = f(ν) │
        │                    │
        │ ν_ist = n_Tist/n_pist │
        └────────┬───────────┘
                 │
            ◇────┴────◇        j
           ╱           ╲──────────────┐
          ╱ ν_ist ≥ ν_grenz ╲         │
           ╲           ╱              │
            ◇────┬────◇              │
                 │                    │
   ┌─────────────┴──────┐    ┌────────┴───────────┐
   │ M_soll = M_ist + ΔM │    │ M_soll = M_ist + ΔM │
   │ ΔM = f(FG)          │    │ ΔM = f(FG)          │
   └─────────┬──────────┘    └────────┬───────────┘
             │                         │
       ┌─────┴─────┐            M_ist , P_ist
       │   M_ist   │
       └───────────┘
```

$$M_{soll}, P_{soll} = f(\nu)$$

$$\nu_{ist} = \frac{n_{T\,ist}}{n_{p\,ist}}$$

$$\nu_{ist} \geq \nu_{grenz}$$

$$S_I = S_{ist} + \Delta s$$

$$M_{soll} = M_{ist} + \Delta M$$
$$\Delta M = f(FG)$$

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   WO 0218811 A